# EUROPEAN PATENT SPECIFICATION

(11) **EP 0 618 427 B1**
(45) Date of publication and mention of the grant of the patent: **23.12.1998**
(21) Application number: 94104581.7
(22) Date of filing: 23.03.1994
(51) Int. Cl.: G01F 23/00

(54) **Device for indicating the level of liquid in a tank, particularly for motor vehicles, including a damper circuit**
Einrichtung zur Anzeige des Niveaus einer Flüssigkeit in einem Tank, insbesondere für Kraftfahrzeuge, mit Dämpfungsschaltung
Dispositif d'indication du niveau de liquide dans un réservoir, en particulier pour des véhicules à moteur, avec un circuit amortisseur

(30) Priority: 01.04.1993 IT TO930219
(43) Date of publication of application: 05.10.1994
(73) Proprietor: FIAT AUTO S.p.A., 10135 Torino (IT)
(72) Inventor: Di Nunzio, Vittorio, I-10139 Torino (IT); Sterza, Giovanni, I-10148 Torino (IT)
(74) Representative: Quinterno, Giuseppe

(56) References cited:
- EP-A- 0 399 678
- DE-A- 3 409 258
- US-A- 4 991 435

## Description

The present invention relates to a device for indicating the level of a liquid in a tank, for example the fuel level in a motor vehicle tank, of the kind defined in the preamble of Claim 1.

For indication of the fuel level in a motor vehicle tank are utilised devices comprising an indicator instrument, typically a movable coil, and an associated sensor or transducer, typically of the floating type are utilised.

Due to the movements to which it is subjected when the motor vehicle is in motion the fuel level is subject to sharp variations, which cause corresponding movements and oscillations of the needle of the indicator instrument.

To overcome this disadvantage damper circuits have been proposed constituted essentially by a low pass filter interposed between the sensor or transducer and the indicator instrument.

A device of the initially defined kind is disclosed in DE-A-34 09 258. The prior device described in this document includes a resistive level sensor having the output connected to the input of a damper circuit formed by a passive RC-type low-pass filter. The output of said low-pass filter is coupled to the input of a current-driven indicator instrument through a voltage/current converter interface. The damping effect is achieved by the passage of the sensor signal through the low-pass filter.

Active low-pass filters including an operational amplifier and associated RC-components are disclosed in P. Horowitz and H. Hill: "The art of electronics", 1989, p. 263-274.

The above type of arrangement has various disadvantages.

In the first place, with the damper circuit interposed there is a reduced possibility of relative compensation between the sensor and the indicator instrument when the supply voltage or the temperature varies.

Moreover, in conditions of static equilibrium there cannot be an exact correspondence between the position of the needle of the indicator instrument and the effective level of the liquid in the tank. This type of defect can be corrected only by performing a specific calibration of the individual damper circuit in relation to the transducer/indicator instrument assembly to which it is to be fitted.

Interposition of the damper circuit between the sensor and the indicator instrument can have the effect that the indicator instrument does not faithfully reproduce the characteristic of the sensor.

When the interposed damper circuit comprises active electronic components, which can be subjected to drift, offset or other leakages, measurement errors can occur which are difficult to compensate in an unequivocal manner in mass production.

The object of the present invention is to provide a damper circuit which makes it possible to obviate the disadvantages of the prior art devices described above.

According to the invention this object is achieved with a device having the characteristics defined in the attached Claim 1.

Other advantageous characteristics of a device according to the invention are defined in the subsidiary claims.

Further characteristics and advantages of the invention will become apparent from the following detailed description, given with reference to the attached drawings and provided purely by way of non limitative example.

In the drawings:
Figure 1 is a circuit diagram of an embodiment of a device according to the invention; and
Figure 2 is a circuit diagram of a further embodiment.

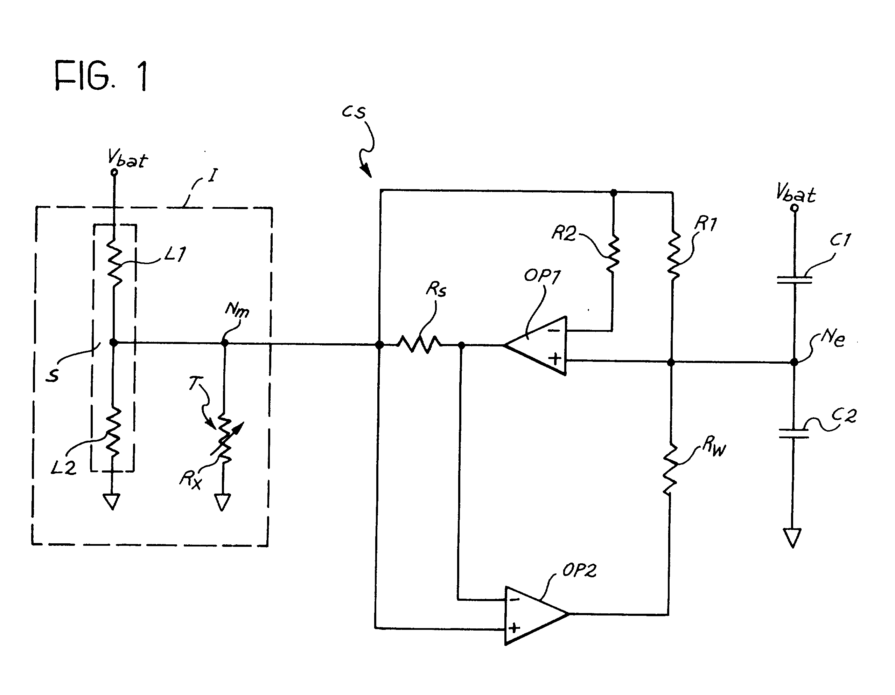

In figure 1 a device for indicating the level of the liquid in a tank, of type known per se, is generally indicated with the reference letter I. This device essentially comprises an indicator instrument S schematically shown as two inductances L1, L2 connected between a DC voltage source Vbat and earth, and an electrical liquid level sensor or transducer T. The sensor or transducer T is, in particular, of type similar to a resistor having an electrical resistance Rx which is variable as a function of the liquid level. The variable resistor Rx is connected between earth and a node Nm representing the input of the indicator instrument S.

To the node Nm is connected the output of a damper circuit according to the invention, generally indicated CS.

The damper circuit CS essentially comprises an operational amplifier OP1 the output of which is coupled to the node Nm. The non-inverting input (+) and inverting input (-) of the operational amplifier OP1 are connected to the node Nm through resistors R1 and R2.

The non-inverting input (+) of OP1 is further connected to a node Ne constituting the junction between two capacitors C1 and C2 disposed between the voltage source Vbat and earth.

The voltage source Vbat is, for example, the battery of a motor vehicle.

The above described circuit arrangement is such that the amplifier OP1 behaves essentially as a voltage controlled current generator. In operation it provides an output current which is substantially zero when the potential difference between the nodes Nm and Ne is substantially zero.

This situation corresponds to a condition in which the level of the liquid in the tank is stationary. When a variation of the liquid level in the tank occurs, a variation of Rx, and therefore of the potential at the node Nm also occurs. This variation is immediately relayed to the inverting input of OP1 by the resistor R2, and tends to influence the potential of the node Ne (and therefore the potential at the non-inverting input of OP1) via the resistor R1. The variation of the potential of the node Ne is opposed however by the capacitors C1 and C2, which together with the resistor R1 (and the feedback circuit OP1, Rₛ, R_{w} which will be described hereinbelow) determine the time constant of the damper circuit CS.

The voltage between the node Ne and earth tends to follow, with this time constant, the variations in the voltage between the node Nm and earth.

Consequently, when a variation of the potential of Nm occurs, this creates a potential difference between the inputs of OP1, which causes a current to flow in the resistor Rₛ (connected between its output and Nm) the magnitude and sign of which depend on the magnitude and sign of the said potential difference. This current tends to oppose the variations in the voltage between the node Nm and earth. The magnitude of this current gradually reduces as the potential of the node Ne approaches the potential of the node Nm. The damper circuit CS therefore acts as a current summer/subtracter at the node Nm, damping variations in the signal applied to the input of the indicator instrument S and causing a slow variation in the position of its needle.

Once the new equilibrium situation has been reached the potentials of the nodes Nm and Ne are again identical with one another, and the output current from the damper circuit CS is zero.

If the variations in the level of the fuel are not unidirectional, but consequent on the tank being shaken, with an average value of the oscillation being zero or almost zero, the damper circuit CS acts by alternatively pumping current to and subtracting current from the node Nm with the result that it maintains the position of the needle of the indicator instrument S substantially unchanged.

It is to be noted that the capacitor C1 is not strictly necessary for achievement of the damping effect.

The presence of this capacitor is however convenient in that it allows compensation, and therefore neutralisation, of variations in the potential of the node Nm due to possible fluctuations in the DC voltage supplied from the source Vbat, directly applying to the node Ne a proportion of the possible variation of the supply voltage equal to the ratio between C1 and C2.

The capacitors C1 and C2 conveniently have very high values so that it is possible that, due to thermal variations or ageing of the dielectric of these capacitors they may offer non-negligible parasitic resistances such as to give rise to leakage currents. To overcome, at least in part, the disadvantages due to leakage currents in the said capacitors a further operational amplifier OP2 is provided, operating as a comparator with its inputs connected across the resistor Rₛ and its output connected to the inverting input of OP1 through a resistor R_{w}. In the event of leakage currents due to C1 or C2 the potential at the node Ne would tend to become (inappropriately) modified with respect to the potential of the node Nm, causing consequent undue intervention of the damper circuit CS. This event leads to a potential difference across the terminals of Rₛ the sign of which is such as to cause controlled and modulated insertion of Rw for the purpose of nullifying the effects of a leakage resistance of value similar to that of R_{w}. Since this directly influences the node Ne outside the preset rules for the normal damping action, the result is that this effect is weakened in a manner which is inverse to the value of R_{w} and therefore this operative limit fixes the maximum value of compensatable leakage.

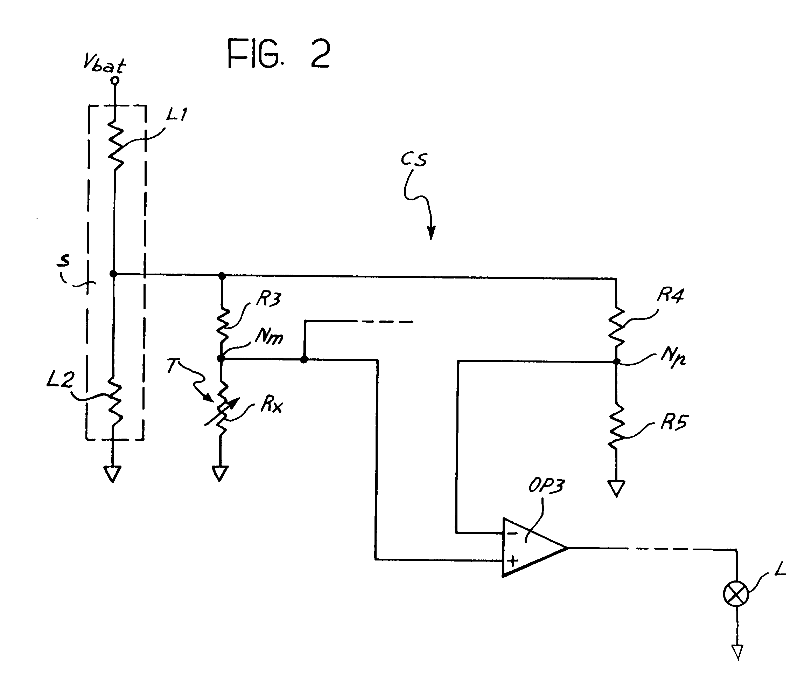

With reference to Figure 2 a variant embodiment will now be described which allows electronic detection and indication of the achievement of a minimum level of liquid in the tank (reserve level). In this figure the indicator instrument S, the level sensor T (Rx) and the components necessary to achieve this additional function are shown. The circuit components necessary to achieve the above-described functions have not been illustrated, but their arrangement and connections corresponds to that shown in Figure 1.

In the Figure 2 circuit a resistor R3 has been interposed between the node Nm and the input of the indicator instrument S. This resistor conveniently has a very low resistance of the order of a few Ohms, so that in fact it has no influence on the indication provided by the indicator instrument.

In parallel with the circuit branch comprising the resistor R3 and the sensor T (Rx) there is connected a further circuit branch comprising two resistors R4 and R5. An operational amplifier OP3 acting as a comparator has its inputs connected to the node Nm and to the junction Np between the resistors R4 and R5.

The resistors R3, R4, R5 and Rx together form a bridge circuit. By suitably dimensioning the values of the resistors R3, R4 and R5 it is possible to arrange that the output of the comparator OP3 changes state at a certain predetermined minimum level of the liquid in the container (reserve level). The output of the comparator OP3 can be utilised to control an optical indicator L. In use on a motor vehicle the optical indicator L can conveniently be disposed in the instrument panel close to the level indicator S.

The circuit described above with reference to Figure 2 allows achievement of a minimum liquid level to be indicated electronically without having to complicate the level sensor or transducer T with supplementary contacts or associated connection and cabling elements.

As opposed to preceding circuits, the circuit of Figure 2 allows control of the indicator lamp L on the basis of signals provided by the sensor T, effectively filtered and damped, whilst in prior art circuits the reserve level indicator is controlled to illuminate with a delay via a simple RC circuit.

The above described damping circuits can be fitted with other circuits not illustrated, functioning to provide protection against reverse polarity, over-voltage and perturbations, fulfilling initial reset functions etc.

Naturally, the principle of the invention remaining the same, the embodiments and details of construction can be widely varied with respect to what has been described and illustrated purely by way of non-limitative example, without by this departing from the ambit of the present invention.

## Claims

1. A device for indicating the level of a liquid in a tank, particularly for motor vehicles, comprising an indicator instrument (S) or the like to the input of which is connected the output of an electric level sensor (T) comparable to a resistor (Rx) having an electrical resistance variable as a function of the level of the liquid and providing an output voltage signal, and a damper circuit (CS) comprising a (first) capacitor (C2) connected to the output (Nm) of the sensor (T) via a (first) resistor (R1) in such a way that in use the voltage of the said capacitor tends to follow the variations of the output voltage of the sensor (T) with a predetermined time constant;
characterised in that the damper circuit (CS) comprises
a voltage controlled current generator (OP1) having a first input connected to the output (Nm) of the sensor (T), and a second input connected to the said (first) capacitor (C2); the said generator (OP1) being arranged to provide at its output a substantially zero current when the potential difference between said first and second inputs is substantially zero, and a current the magnitude and sign of which depends on the magnitude and sign of the said potential difference when the said potential difference is different from zero, the output of the current generator (OP1) and the output of the sensor (T) being connected with each other in an additive manner and connected to the indicator instrument (S) so that the output current of the generator tends to oppose variations in the sensor output voltage signal.

2. A circuit according to Claim 1, characterised in that the said current generator (OP1) comprises a (first) operational amplifier (OP1) the non-inverting input of which is connected to the said (first) capacitor (C2), the inverting input of which is intended to be connected to the output (Nm) of the level sensor (T) via a resistor (R2), and the output of which is intended to be connected to the output (Nm) of the said sensor (T);
the (first) capacitor (C2) being connected between the non-inverting input of the said operational amplifier (OP1) and earth.

3. A circuit according to Claim 2, characterised in that it includes a second capacitor (C1) connected between the said first capacitor (C2) and a DC voltage source (Vbat).

4. A circuit according to any preceding claim, characterised in that in series with the output of the current generator (OP1) there is connected a second resistor (Rs) the terminals of which are connected to the inputs of a second operational amplifier (OP2) the output of which is connected to the second input of the current generator (OP1) through a third resistor (R_{w}).

5. A circuit according to any preceding claim, characterised in that it includes a further resistor (R3) intended to be interposed between the output (Nm) of the level sensor (T) and the input of the indicator instrument (S); the said further resistor (R3) having a resistance very much less than that of (Rx) of the sensor (T); a second circuit branch being connected in parallel to the circuit branch formed in operation by the sensor (T) and the said further resistor (R3), the said second circuit branch including a fourth and a fifth resistor (R4, R5) such as to form a bridge circuit; a comparator circuit (OP3) having an input connected to the junction between the sensor (T) and the said further resistor (R3), and a second input connected to the junction between the said fourth and fifth resistors (R4, R5); the resistances of the said further resistor (R3) and of the fourth and fifth resistor (R4, R5) being selected such that the said comparator (OP3) provides at its output when the signal provided by the sensor (T) is indicative of the predetermined level of liquid in the tank.

## Patentansprüche

1. Vorrichtung, um den Pegel einer Flüssigkeit in einem Behälter anzuzeigen, im besonderen für Kraftfahrzeuge, wobei die Vorrichtung ein Anzeigeinstrument (S) oder ähnliches besitzt, an dessen Eingang der Ausgang eines elektrischen Pegelgebers (T) gelegt wird, der mit einem Widerstand (Rx) vergleichbar ist, der einen elektrischen Widerstandswert besitzt, der als Funktion des Pegel der Flüssigkeit veränderbar ist, und der ein Ausgangsspannungs-Signal liefert, sowie eine Dämpfungsstufe (CS) besitzt, die einen (ersten) Kondensator (C2), der mit dem Ausgang (Nm) des Gebers (T) über einen (ersten) Widerstand (R1) so verbunden ist, dass im Betrieb die Spannung des Kondensators versucht, den Änderungen der Ausgangsspannung des Gebers (T) mit einer vorgegebenen Zeitkonstanten zu folgen;
dadurch gekennzeichnet, dass die Dämpfungsstufe (CS) enthält:
einen spannungsgesteuerten Stromgenerator (OP1), der einen ersten Eingang, der mit dem Ausgang (Nm) des Gebers (T) verbunden ist, sowie einen zweiten Eingang besitzt, der mit dem (ersten) Kondensator (C2) verbunden ist; wobei der Generator (OP1) so aufgebaut ist, um an seinem Ausgang einen Strom zu liefern, der im wesentlichen gleich Null ist, wenn die Potentialdifferenz zwischen dem ersten und zweiten Eingang im wesentlichen gleich Null ist, und einen Strom mit einer Größe und einer Richtung zu liefern, die von der Größe und der Richtung der Potentialdifferenz abhängen, wenn diese Potentialdifferenz von Null verschieden ist, wobei der Ausgang des Stromgenerators (OP1) sowie der Ausgang des Gebers (T) miteinander additiv verbunden sind und am Anzeigeinstrument (S) liegen, so dass der Ausgangsstrom des Generators versucht, den Änderungen im Ausgangsspannungs-Signal des Gebers entgegenzuwirken.

2. Schaltkreis gemäß Anspruch 1, dadurch gekennzeichnet, dass der Stromgenerator (OP1) einen (ersten) Operationsverstärker (OP1) enthält, dessen nichtinvertierender Eingang mit dem (ersten) Kondensator (C2) verbunden ist, dessen invertierender Eingang über einen Widerstand (R2) am Ausgang (Nm) des Pegelgebers (T) liegt und dessen Ausgang mit dem Ausgang (Nm) des Gebers (T) verbunden ist;
wobei der (erste) Kondensator (C2) zwischen dem nichtinvertierenden Eingang des Operationsverstärkers (OP1) und Masse liegt.

3. Schaltkreis gemäß Anspruch 2, dadurch gekennzeichnet, dass der Schaltkreis einen zweiten Kondensator (C1) aufweist, der zwischen dem ersten Kondensator (C2) und einer Gleichspannungsquelle (Vbat) liegt.

4. Schaltkreis gemäß irgendeinem der bisherigen Ansprüche, dadurch gekennzeichnet, dass in Serie mit dem Ausgang des Stromgenerators (OP1) ein zweiter Widerstand (Rs) liegt, dessen Anschlüsse mit den Eingängen eines zweiten Operationsverstärkers (OP2) verbunden sind, dessen Ausgang über einen dritten Widerstand (Rw) am zweiten Eingang des Stromgenerators (OP1) liegt.

5. Schaltkreis gemäß irgendeinem der bisherigen Ansprüche, dadurch gekennzeichnet, dass der Schaltkreis einen weiteren Widerstand (R3) aufweist, der zwischen dem Ausgang (Nm) des Pegelgebers (T) und dem Eingang des Anzeigeinstruments (S) liegt; wobei der weitere Widerstand (R3) einen Widerstandswert besitzt, der sehr viel kleiner als der Widerstandswert des Widerstands (Rx) des Gebers (T) ist; wobei ein zweiter Schaltkreiszweig parallel zu jenem Schaltkreiszweig geschaltet ist, der im Betrieb vom Geber (T) und dem weiteren Widerstand (R3) gebildet wird, wobei der zweite Schaltkreiszweig einen vierten und fünften Widerstand (R4, R5) aufweist, um eine Brückenschaltung zu bilden; wobei eine Vergleicherstufe (OP3) einen Eingang, der am Verbindungspunkt zwischen dem Geber (T) und dem weiteren Widerstand (R3) liegt, sowie einen zweiten Eingang besitzt, der am Verbindungspunkt zwischen dem vierten und fünften Widerstand (R4, R5) liegt; wobei die Widerstandswerte des weiteren Widerstands (R3) sowie des vierten und fünften Widerstands (R4, R5) so gewählt werden, dass der Vergleicher (OP3) dann einen Ausgang liefert, wenn das vom Geber (T) gelieferte Signal den vorgegebenen Pegel der Flüssigkeit im Behälter anzeigt.

## Revendications

1. Dispositif destiné à indiquer le niveau d'un liquide dans un réservoir, notamment pour véhicule à moteur, comprenant un instrument indicateur (S) ou analogue à l'entrée duquel est connectée la sortie d'un capteur électrique (T) de niveau comparable à une résistance (Rx) ayant une valeur électrique variable en fonction du niveau du liquide et donnant un signal de tension de sortie, et un circuit amortisseur (CS) qui comprend un (premier) condensateur (C2) connecté à la sortie (Nm) du capteur (T) par une (première) résistance (R1) d'une manière telle que, pendant l'utilisation, la tension du condensateur a tendance à suivre les variations de la tension de sortie du capteur (T) avec une constante de temps prédéterminée,
caractérisé en ce que le circuit amortisseur (CS) comprend
un générateur de courant (OP1) commandé par une tension, ayant une première entrée connectée à la sortie (Nm) du capteur (T) et une seconde entrée connectée au (premier) condensateur (C2); le générateur (OP1) étant destiné à transmettre à sa sortie un courant pratiquement nul lorsque la différence de potentiel entre la première et la seconde entrée est pratiquement nulle, et un courant dont l'intensité et le signe dépendent de l'amplitude et du signe de la différence de potentiel lorsque la différence de potentiel n'est pas nulle, le signal de sortie du générateur de courant (OP1) et le signal de sortie du capteur (T) étant ajoutés et transmis à un instrument indicateur (S) afin que le courant de sortie du générateur ait tendance à s'opposer aux variations du signal de tension de sortie du capteur.

2. Circuit selon la revendication 1, caractérisé en ce que le générateur de courant (OP1) comporte un (premier) amplificateur opérationnel (OP1) dont l'entrée de non-inversion est connectée au (premier) condensateur (C2), dont l'entrée d'inversion est destinée à être connectée à la sortie (Nm) du capteur (T) de niveau par une résistance (R2) et dont la sortie est destinée à être connectée à la sortie (Nm) du capteur (T),
le (premier) condensateur (C2) étant connecté entre l'entrée de non-inversion de l'amplificateur opérationnel (OP1) et la masse.

3. Circuit selon la revendication 2, caractérisé en ce qu'il comprend un second condensateur (C1) connecté entre le premier condensateur (C2) et une source de tension continue (Vbat).

4. Circuit selon l'une quelconque des revendications précédentes, caractérisé en ce qu'il comporte, en série avec la sortie du générateur du courant (OP1), une seconde résistance (Rs) connectée de manière que ses bornes soient connectées aux entrées d'un second amplificateur opérationnel (OP2) dont la sortie est connectée à la seconde entrée du générateur de courant (OP1) par une troisième résistance (Rw).

5. Circuit selon l'une quelconque des revendications précédentes, caractérisé en ce qu'il comprend une résistance supplémentaire (R3) destinée à être placée entre la sortie (Nm) du capteur (T) de niveau et l'entrée de l'instrument indicateur (S); la résistance supplémentaire (R3) ayant une valeur très inférieure à celle (Rx) du capteur (T); une seconde branche de circuit étant connectée en parallèle à la branche de circuit formée pendant le fonctionnement par le capteur (T) et la résistance supplémentaire (R3), la seconde branche de circuit comprenant une quatrième et une cinquième résistance (R4, R5) destinées à former un circuit en pont; un circuit comparateur (OP3) ayant une entrée connectée à la connexion du capteur (T) et de la résistance supplémentaire (R3), et une seconde entrée connectée à la connexion de la quatrième et de la cinquième résistance (R4, R5); les valeurs de la résistance supplémentaire (R3) et des quatrième et cinquième résistances (R4, R5) étant sélectionnées afin que le comparateur (OP3) donne un signal de sortie lorsque le signal donné par le capteur (T) est représentatif du niveau prédéterminé du liquide dans le réservoir.
